(19) **Europäisches Patentamt / European Patent Office / Office européen des brevets**

(11) **EP 4 372 673 B1**

(12) **EUROPEAN PATENT SPECIFICATION**

(45) Date of publication and mention
of the grant of the patent:
**20.08.2025 Bulletin 2025/34**

(21) Application number: **23209198.3**

(22) Date of filing: **10.11.2023**

(51) International Patent Classification (IPC):
**G06T 5/60** *(2024.01)* **G06T 5/70** *(2024.01)*
**G06T 3/4046** *(2024.01)*

(52) Cooperative Patent Classification (CPC):
**G06T 5/60; G06T 3/4046; G06T 5/70;**
G06T 2207/20084

(54) **METHOD AND APPARATUS FOR PROCESSING IMAGE BASED ON NEURAL NETWORK**

VERFAHREN UND VORRICHTUNG ZUR VERARBEITUNG EINES BILDES AUF DER BASIS EINES NEURONALEN NETZWERKS

PROCÉDÉ ET APPAREIL DE TRAITEMENT D'IMAGE SUR LA BASE D'UN RÉSEAU NEURONAL

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **11.11.2022 KR 20220150196**

(43) Date of publication of application:
**22.05.2024 Bulletin 2024/21**

(73) Proprietors:
• **Samsung Electronics Co., Ltd.
Suwon-si, Gyeonggi-do 16677 (KR)**
• **Seoul National University R & DB Foundation
Seoul 08826 (KR)**

(72) Inventors:
• **Kwon, Kinam
16678 Suwon-si, Gyeonggi-do (KR)**
• **Kim, Heewon
08826 Seoul (KR)**
• **Lee, Kyoung Mu
08826 Seoul (KR)**
• **Lee, Hyong Euk
16678 Suwon-si, Gyeonggi-do (KR)**

(74) Representative: **Arnold & Siedsma
Bezuidenhoutseweg 57
2594 AC The Hague (NL)**

(56) References cited:
**US-A1- 2009 232 409    US-A1- 2022 122 305**

• **SAMADANI R ET AL: "Image Thumbnails That Represent Blur and Noise", IEEE TRANSACTIONS ON IMAGE PROCESSING, IEEE, USA, vol. 19, no. 2, 1 February 2010 (2010-02-01), pages 363 - 373, XP011284274, ISSN: 1057-7149, DOI: 10.1109/TIP.2009.2035847**
• **SEYED A. ESMAEILI ET AL: "Fast-At: Fast Automatic Thumbnail Generation Using Deep Neural Networks", ARXIV.ORG, 10 April 2017 (2017-04-10), US, pages 4178 - 4186, XP055548819, DOI: 10.1109/CVPR.2017.445**

## Description

BACKGROUND

One or more embodiments relate to a method and apparatus for processing an image using a neural network.

Neural networks, including deep learning-based neural networks may be used for image processing. The neural network may perform tasks such as mapping input data to output data according to a non-linear relationship. Neural networks may be trained to perform such tasks using learning methods such as supervised learning, unsupervised learning, or reinforcement learning. In some cases, a neural network trained for a special purpose, such as image restoration, may also have the ability to generate accurate output in response to an input pattern that was not part of the training set.

R. Samadani et al., Image Thumbnails That Represent Blur and Noise, in IEEE Transactions On Image Processing, IEEE, USA, vol. 19, no. 2, pages 363-373 (1 February 2010), discloses an efficient algorithm with a blur-generating component and a noise-generating component which preserves the local blur and the noise of the originals. The local blur is rapidly estimated using a scale-space expansion of the standard thumbnail and subsequently used to apply a space-varying blur to the thumbnail. The noise is estimated and rendered by using multirate signal transformations that allow most of the processing to occur at the lower spatial sampling rate of the thumbnail.

US 2022/0122305 A1 discloses an improved system architecture which uses a pipeline including an encoder and a Generative Adversarial Network (GAN) including a generator neural network to generate edited images with improved speed, realism, and identity preservation. The encoder produces an initial latent space representation of an input image by encoding the input image. The generator neural network generates an initial output image by processing the initial latent space representation of the input image. The system generates an optimized latent space representation of the input image using a loss minimization technique that minimizes a loss between the input image and the initial output image. The loss is based on target perceptual features extracted from the input image and initial perceptual features extracted from the initial output image. The system outputs the optimized latent space representation of the input image for downstream use.

SUMMARY

The present invention relates to a method of reducing degradation inconsistency between preview and original images by estimating blur, noise, or compression artifact of the original image and generating the equivalent level of the blur, noise, and compression artifact as the original image in a low-resolution image, and by determining a degree of degradation or restoration of the original image using the preview image.

Indeed, in the related prior art, the degradation of the original image is difficult to be recognized in a preview image (or a downscaled image), and in general, a method of restoring a preview image is not suitable for restoring the original image.

Therefore, the aim of the present invention is to reduce the degradation inconsistency between such a preview and original images and to estimate a degradation degree or a restoration result of the original image using the preview image.

According to a first aspect of the present invention, a computer-implemented image processing method includes receiving an input image having a first resolution and a degradation characteristic, wherein degradation refers to change or reduction in the quality or information content of an image; and generating an output image based on the input image using a neural network model, wherein the output image has a second resolution that is lower than the first resolution, and wherein the neural network model is configured to apply the degradation characteristic of the input image to the output image. The generating of the output image comprises estimating the degradation characteristic of the input image based on the input image, generating a temporary restored image having the second resolution by performing image downscaling and image restoration based on the input image, and applying the degradation characteristic to the temporary restored image. The neural network model comprises a combined model configured to estimate the degradation characteristic of the input image, generate the temporary restored image, and apply the degradation characteristic to the temporary restored image.

According to an exemplary embodiment, the degradation characteristic is not observable in a low-resolution version of the input image that has the second resolution and is formed by downscaling the input image.

According to an exemplary embodiment, the degradation characteristic comprises a noise characteristic or a blur characteristic.

According to an exemplary embodiment, the neural network model comprises a characteristic estimation model configured to estimate the degradation characteristic of the input image, an image restoration model configured to generate the temporary restored image, and a characteristic application model configured to apply the degradation characteristic to the temporary restored image.

According to an exemplary embodiment, the characteristic estimation model is configured to output a characteristic vector corresponding to the degradation characteristic based on the input image, and the characteristic application model is configured to generate the output image based on the temporary restored image and the characteristic vector.

According to an exemplary embodiment, the method further comprises generating a plurality of candidate restored images having the second resolution by performing a restoration task based on a plurality of candidate restoration characteristics, and generating a restored image having the first resolution by performing a restoration task on the input image based on a candidate restoration characteristic selected from the plurality of candidate restoration characteristics.

According to an exemplary embodiment, a plurality of degradation characteristics is observable from the plurality of candidate restored images, respectively, when the plurality of candidate restored images are upscaled to have the first resolution.

According to a second aspect of the present invention, a non-transitory computer-readable storage medium stores instructions that, when executed by a processor, cause the processor to perform the method of any one of the exemplary embodiments of the first aspect.

According to a third aspect of the present disclosure which is not covered by the invention, an image processing apparatus includes a processor and a memory configured to store instructions executable by the processor. The processor is configured to execute the instructions to receive an input image having a first resolution and a degradation characteristic; and generate a characteristic vector representing the degradation characteristic; generate an output image based on the input image using a neural network model that applies the degradation characteristic to the output image based on the characteristic vector, wherein the output image has a second resolution that is lower than the first resolution, and wherein the degradation characteristic is observable in the output image.

According to an exemplary embodiment, the degradation characteristic is not observable in a low-resolution version of the input image that has the second resolution and is formed by downscaling the input image.

According to an exemplary embodiment, to estimate the output image, the processor is configured to estimate the degradation characteristic of the input image based on the input image, generate a temporary restored image having the second resolution by performing image downscaling and image restoration based on the input image, and apply the image characteristic to the temporary restored image.

According to an exemplary embodiment, to estimate the output image, the processor is configured to estimate the degradation characteristic of the input image based on the input image, generate a temporary image having the second resolution by performing image downscaling based on the input image, and apply the degradation characteristic to the temporary image.

According to an exemplary embodiment, the processor is configured to generate a plurality of candidate restored images having the second resolution by performing a restoration task based on a plurality of candidate restoration characteristics, and generate a restored image having the first resolution by performing a restoration task on the input image based on a candidate restoration characteristic selected from the plurality of candidate restoration characteristics.

According to an exemplary embodiment, a plurality of degradation characteristics are observable from the plurality of candidate restored images, respectively, when the plurality of candidate restored images are upscaled to have the first resolution.

According to a fourth aspect of the present invention, an electronic apparatus includes a camera configured to generate an input image having a first resolution and a degradation characteristic, wherein degradation refers to change or reduction in the quality or information content of an image; and a processor configured to generate an output image based on the input image, wherein the output image has a second resolution that is lower than the first resolution; and apply the degradation characteristic to the output image using a neural network model. The processor is configured to estimate the degradation characteristic of the input image based on the input image, generate a temporary restored image having the second resolution by performing image downscaling and image restoration based on the input image, and apply the degradation characteristic to the temporary restored image. The neural network model comprises a combined model configured to estimate the degradation characteristic of the input image, generate the temporary restored image, and apply the degradation characteristic to the temporary restored image.

According to an exemplary embodiment, the degradation characteristic is not observable in a low-resolution version of the input image that has the second resolution and is formed by downscaling the input image.

According to an exemplary embodiment, the degradation characteristic comprises a noise characteristic or a blur characteristic.

According to a fifth aspect of the present disclosure which is not covered by the invention, a computer-implemented method includes obtaining an input image having a first resolution and a degradation characteristic; generating a characteristic vector representing the degradation characteristic using a neural network model; generating an intermediate image based on the input image, wherein the intermediate image has a second resolution less than the first resolution; and generating an output image having the second resolution by applying the degradation characteristic to the intermediate image based on the characteristic vector.

According to an exemplary embodiment, the intermediate image comprises a temporary image that is a downscaled version of the input image.

According to an exemplary embodiment, the intermediate image comprises a temporary restored image that is a downscaled and restored version of the input image.

According to an exemplary embodiment, the method further comprises displaying a preview of the input image based on the output image.

According to an exemplary embodiment, the method further comprises receiving a user input indicating an edit to be made to the input image based on the display of the preview of the input image, and applying the edit to the input image to obtain an edited image.

Additional aspects of embodiments will be set forth in part in the description which follows and, in part, will be apparent from the description, or may be learned by practice of the disclosure.

BRIEF DESCRIPTION OF THE DRAWINGS

These and/or other aspects, features, and advantages of the invention will become apparent and more readily appreciated from the following description of example embodiments, taken in conjunction with the accompanying drawings of which:

FIG. 1 is a diagram illustrating an example of an image processing process using a neural network model according to aspects of the present disclosure;
FIG. 2 is a diagram illustrating an example of a structure of a neural network according to aspects of the present disclosure;
FIG. 3 is a diagram illustrating an example of a structure of a characteristic estimation model according to aspects of the present disclosure;
FIG. 4 is a diagram illustrating an example of a structure of an image restoration model according to aspects of the present disclosure;
FIG. 5 is a diagram illustrating an example of a structure of an image restoration model according to aspects of the present disclosure;
FIG. 6 is a diagram illustrating an example of a structure of a characteristic application model according to aspects of the present disclosure;
FIG. 7 is a diagram illustrating an example of an image characteristic of an input image shown through an upscaled image of a preview image according to aspects of the present disclosure;
FIG. 8 is a diagram illustrating an example of a preview image with an applied image characteristic of the input image according to aspects of the present disclosure;
FIGS. 9 and 10 are diagrams illustrating examples of results of various image processing according to aspects of the present disclosure;
FIG. 11 is a diagram illustrating an example of an image restoration process according to aspects of the present disclosure;
FIGS. 12, 13, and 14 are diagrams illustrating examples of a relationship between image downscaling and image characteristics according to aspects of the present disclosure;
FIGS. 15, 16, and 17 are diagrams illustrating examples of various structures of a neural network model according to aspects of the present disclosure;
FIG. 18 is a flowchart illustrating an example of an image processing method according to aspects of the present disclosure;
FIG. 19 is a block diagram illustrating an example of a configuration of an image processing apparatus according to aspects of the present disclosure;
FIG. 20 is a block diagram illustrating an example of a configuration of an electronic apparatus.
FIG. 21 is a flowchart illustrating a method for image processing according to aspects of the present disclosure; and
FIG. 22 illustrates a method for a user to edit an image using an image processing apparatus according to aspects of the present disclosure.

DETAILED DESCRIPTION

The present disclosure relates to image processing, and more specifically, to image processing using a neural network. According to embodiments of the disclosure, the resolution of an image may be reduced (e.g., to generate a preview image), and a degradation of the original image may be added to the preview image. This can help a viewer of the image accurately estimate a level of degradation of the image, which can help the viewer edit the image or select an appropriate image.

As the resolution of an image is reduced, a degradation of the image may also be reduced. For example, blurriness of an image at high resolution may disappear at low resolution because the low-resolution image does not have sufficient detail to depict the blurriness of the original image. This may cause difficulty in confirming a degree of degradation of the original image through a low-resolution preview image.

The present disclosure provides methods of confirming the degree of degradation of the original image, even from the low-resolution preview image. According to some embodiments of the present disclosure, a degradation vector of the original image is applied to a low-resolution preview image. Accordingly, the degradation observed from a high-resolution original image may be observed even from the low-resolution preview image.

The present disclosure may apply degradation to the preview image using a neural network model. An example embodiment includes a degradation estimation model, a low-resolution image restoration model, and a degradation application model. The degradation estimation model estimates a degradation vector of an original image, the low-resolution image restoration model performs downscaling and restoration of the original image, and degradation application model applies the degradation vector of the original image to a low-resolution restored image. An additive embodiment provides various modifications of the network structure.

According to the present disclosure, various restoration options are presented with the low-resolution preview image and a user may select a desired one from the various restoration options. Such a method is advantageous from a viewpoint of the amount of computation, since a restoration task with various options may be performed on the low-resolution image and the restoration task may be performed on the high-resolution image regarding the selected one option.

Examples are described in detail with reference to the accompanying drawings. When describing the embodiments with reference to the accompanying drawings, like reference numerals refer to like elements and a repeated description related thereto will be omitted.

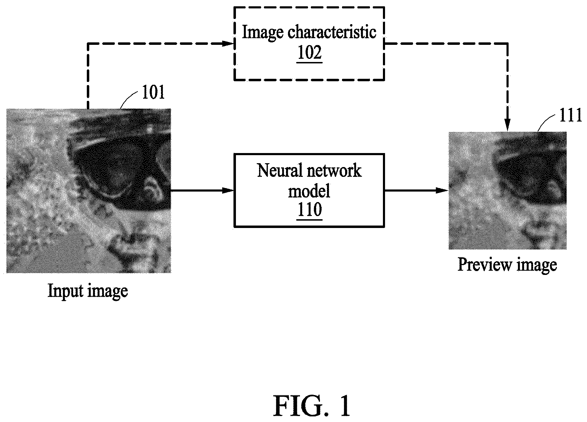

FIG. 1 is a diagram illustrating an example of an image processing process using a neural network model. Referring to FIG. 1, an image processing apparatus may generate a preview image 111 of an input image 101 by using a neural network model 110. The neural network model 110 may include a deep neural network (DNN) including a plurality of layers. The plurality of layers may include an input layer, at least one hidden layer, and an output layer.

The DNN may include at least one of a fully connected network (FCN), a convolutional neural network (CNN), or a recurrent neural network (RNN). For example, at least a portion of the layers included in the neural network may correspond to a CNN, and a portion of the layers may correspond to an FCN. The CNN may be referred to as convolutional layers, and the FCN may be referred to as fully connected layers.

In the case of a CNN, data input to each layer may be referred to as an input feature map, and data output from each layer may be referred to as an output feature map. The input feature map and the output feature map may also be referred to as activation data. When a convolutional layer corresponds to an input layer, the input feature map of the input layer may be an image.

After training based on deep learning, the neural network may perform an inference that is suitable for a purpose for the training by mapping input data and output data that are in a nonlinear relationship to each other. Deep learning may be a machine learning scheme for solving an issue such as image or voice recognition from a big data set. Deep learning may be understood as a process of solving an optimization issue to find a point at which energy is minimized while training a neural network based on prepared training data.

Through supervised or unsupervised learning of deep learning, a weight corresponding to an architecture or model of the neural network may be obtained. Through such a weight, the input data and the output data may be mapped. For example, when a width and a depth of the neural network are sufficiently large, the neural network may have a capacity large enough to implement an arbitrary function. When the neural network is trained based on a sufficiently large quantity of training data through an appropriate training process, an optimal performance may be achieved.

The neural network may be expressed as being trained in advance, in which "in advance" means "before" the neural network is started. The "started" neural network may indicate that the neural network may be ready for inference. For example, "start" of the neural network may include loading of the neural network in a memory, or an input of input data for inference to the neural network after the neural network is loaded in a memory.

The neural network model 110 may receive an input image 101 having a first resolution and an image characteristic 102. The neural network may apply the image characteristic 102 of the input image 101 to the preview image 111. The image characteristic 102 may be a degradation characteristic or a feature of an image such as color, texture, sharpness, or noise, blur, which may be observable in some circumstances and not observable in some other circumstances, affected by conditions including lighting condition, viewing distances, and the size or resolution of the image.

The image characteristic 102 may include a degradation characteristic. Degradation refers to change or reduction in the quality or information content of an image, such as noise, blur, or other distortions. Degradation character refers to a specific type of degradation, such as noise character or blur character, which may be identified, estimated, and in some examples applied to an image. In some examples, a degradation character may be observable in a high-resolution image but not observable in a low-resolution image. In some examples, both the high-resolution image and the low-resolution image may refer to the same original image, where the low-resolution image may be downscaled to a lower resolution from the same original image. But embodiments of the present disclosure may not be limited thereto.

Referring to FIG. 1, the preview image 111 may be a downscaled image of the input image 101. The preview image may have a resolution lower than that of the input image 101. The input image 101 may have a first resolution, and high-resolution preview image 111 may have a second resolution lower than the first resolution. In some examples, the high-resolution input image 101 is downscaled to the preview image 111 without considering the image characteristic 102, and the image characteristic 102 of the input image 101 may not be observable in the low-resolution image. For example, noise observable in the high-resolution input image 101 may not be observable in the low-resolution image. This may be caused by the image characteristic 102 being deteriorated due to the reduction of an image size. In this case, it may be difficult to observe or identify the image characteristic 102 of the input image 101 through the low-resolution image.

More specifically, the image characteristic 102 may include a pixel level degradation characteristic. The pixel level degradation characteristic may refer to an image characteristic that is observable in a high-resolution state but not well observable in a low-resolution state. For example, the image characteristic 102 may be a pixel level character in an image, where the image is upscaled to a high-resolution to the extent that individual pixels of the image character 102 are observable.

According to an embodiment, the image characteristic 102 of the input image 101 is applied to the preview image 111, and the pixel level characteristic of the input image 101 may be applied to the preview image 111 so that they are observable from the preview image 111. For example, the image characteristic 102 applied to the preview image 111 (e.g., a noise character such as a noise level) may be estimated based on the resolution of the input image 101 and the resolution of the preview image 111, so that the image character 102 from the input image 101 may be converted to match the resolution of the preview image 111 and then applied to the preview image 111. Accordingly, by observing the characteristic 102 in the preview image 111, users can more easily identify and assess the degradation or other properties of the input image 101 without needing to view it at its full resolution.

According to the invention, an image processing apparatus estimates the image characteristic 102 of the input image 101 based on the input image 101. The image processing apparatus estimates the degradation characteristic of the input image based on the input image 101. The image processing apparatus generates a low-resolution temporary restored image by performing image downscaling and image restoration based on the input image 101. After that, the image processing apparatus generates the preview image 111 by applying the image characteristic 102 to the temporary restored image. According to an embodiment, the image processing apparatus may estimate the image characteristic 102 using the neural network model 110 may include a first model configured to estimate the image characteristic 102 of the input image 101, a second model configured to estimate the temporary restored image, and a third model configured to apply the image characteristic 102 to the temporary restored image.

The neural network model 110 and the first, second, and third model may be an artificial neural network (ANN). An ANN is a hardware or a software component that includes a number of connected nodes (i.e., artificial neurons), which loosely correspond to the neurons in a human brain. Each connection, or edge, transmits a signal from one node to an (like the physical synapses in a brain). When a node receives a signal, it processes the signal and then transmits the processed signal to other connected nodes. In some cases, the signals between nodes comprise real numbers, and the output of each node is computed by a function of the sum of its inputs. In some examples, nodes may determine their output using other mathematical algorithms (e.g., selecting the max from the inputs as the output) or any other suitable algorithm for activating the node. Each node and edge is associated with one or more node weights that determine how the signal is processed and transmitted.

During the training process, these weights are adjusted to improve the accuracy of the result (i.e., by minimizing a loss function which corresponds in some way to the difference between the current result and the target result). The weight of an edge increases or decreases the strength of the signal transmitted between nodes. In some cases, nodes have a threshold below which a signal is not transmitted at all. In some examples, the nodes are aggregated into layers. Different layers perform different transformations on their inputs. The initial layer is known as the input layer and the last layer is known as the output layer. In some cases, signals traverse some layers multiple times.

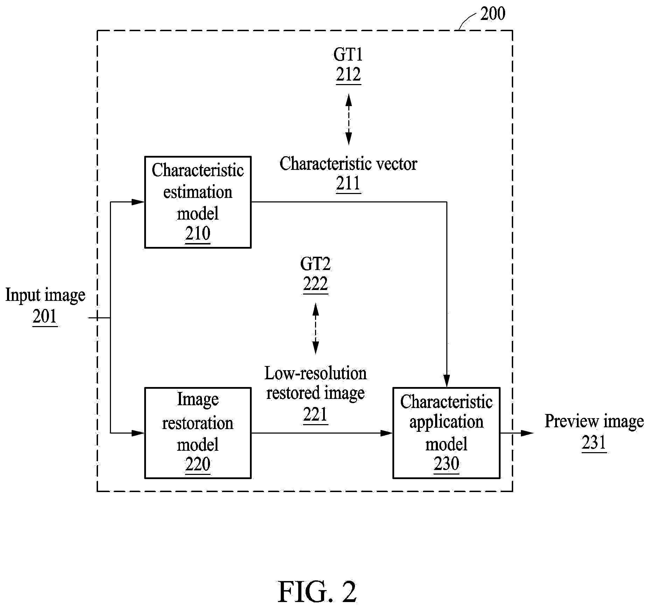

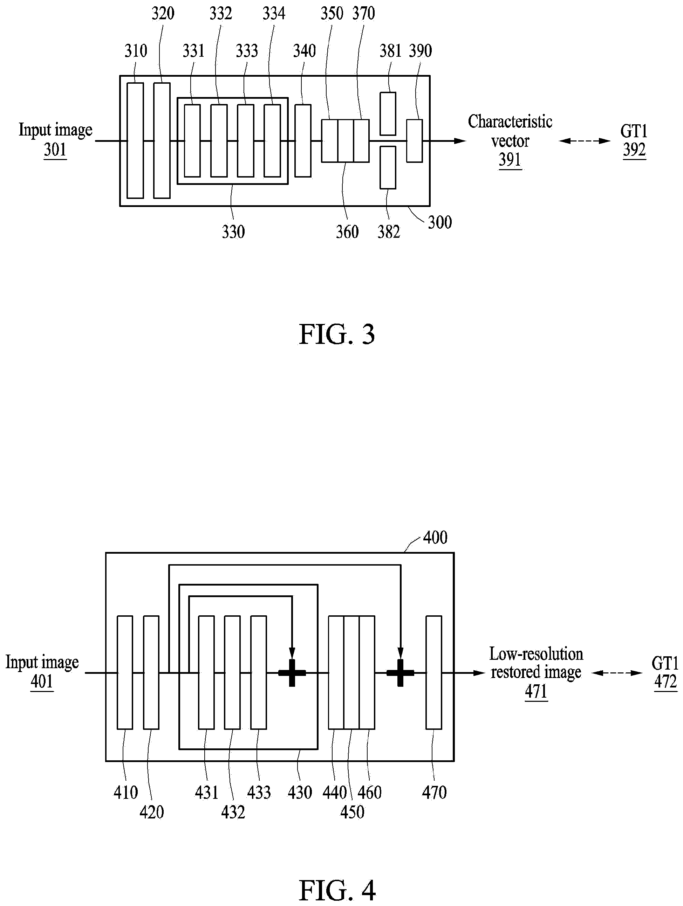

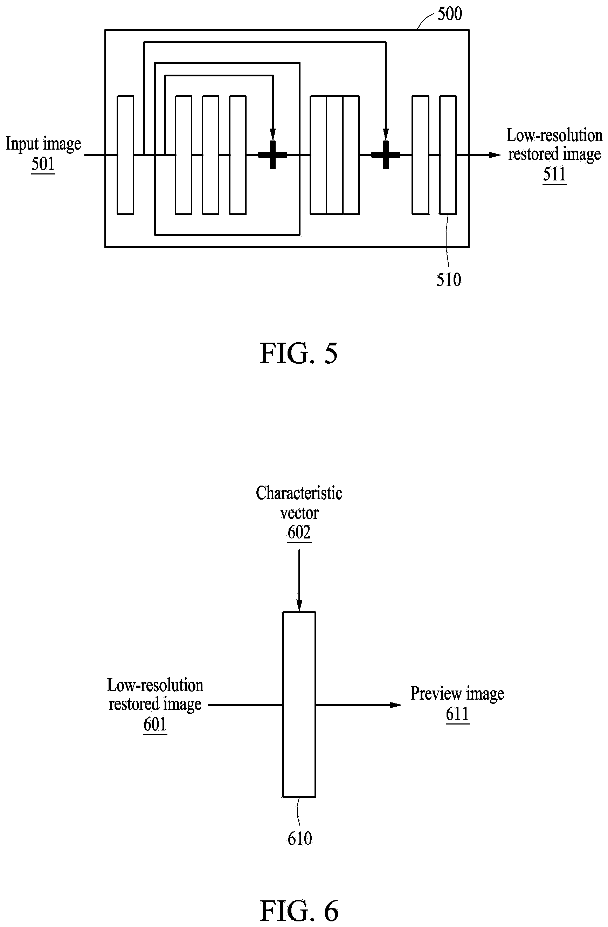

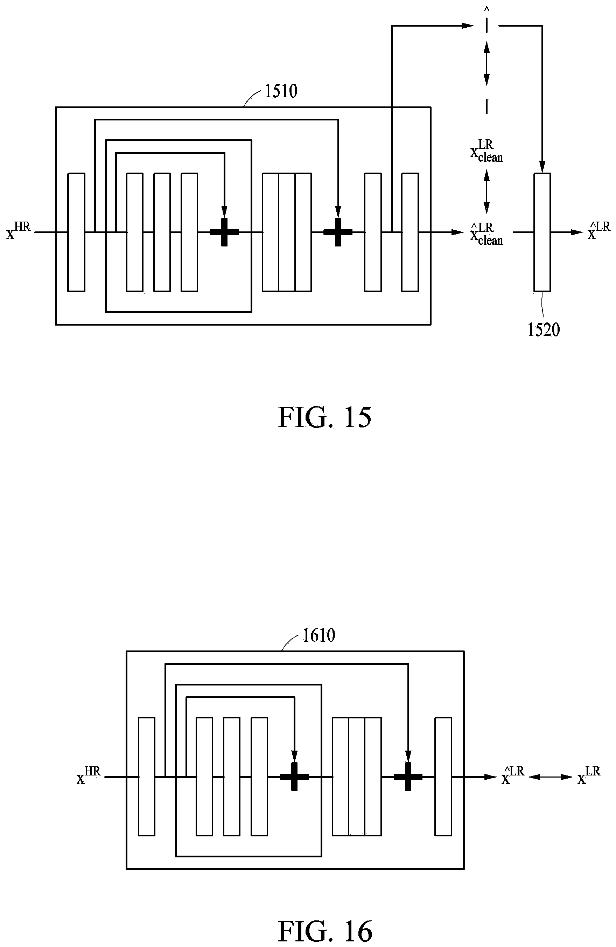

For example, the first model may correspond to a characteristic estimation model 210 of FIG. 2 and a characteristic estimation model 300 of FIG. 3. For example, the second model may correspond to an image restoration model 220 of FIG. 2, an image restoration model 400 of FIG. 4, and an image restoration model 500 of FIG. 5. For example, the third model may correspond to a characteristic application model 230 of FIG. 2 and a characteristic application model 610 of FIG. 6. According to the invention, the neural network model 110 includes a combined model configured to estimate the degradation characteristic of the input image 101, generate the temporary restored image having the second resolution by performing image downscaling and image restoration based on the input image, and apply the image characteristic 102 to the temporary restored image. For example, the combined model may correspond to an image restoration model 1510 of FIG. 16.

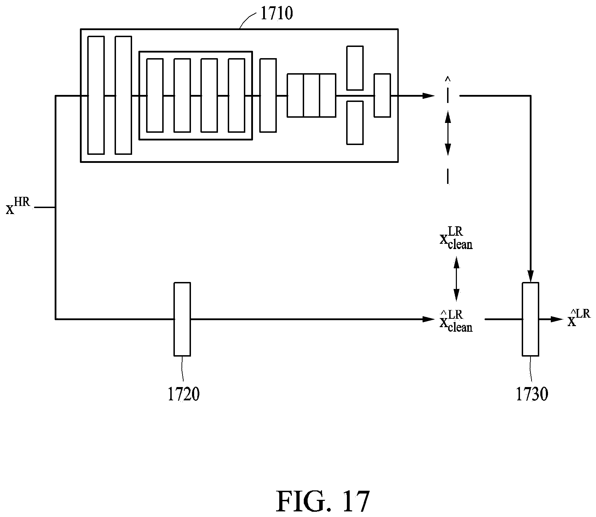

According to an embodiment, the image processing apparatus may estimate the degradation characteristic of the input image 101 based on the input image 101, generate a low-resolution version of the input image 101 that has a second resolution by performing downscaling the input image 101, and estimate the preview image 111 by applying the image characteristic 102 to the low-resolution version of the input image 101. According to an embodiment, the neural network model 110 may include a first model configured to estimate the degradation characteristic of the input image 101, a second model configured to generate the low-resolution version of the input image 101, and a third model configured to apply the degradation characteristic to the temporary image. For example, the first model may correspond to the characteristic estimation model 210 of FIG. 2, the characteristic estimation model 300 of FIG. 3, and a characteristic estimation model 1710 of FIG. 17. For example, the second model may correspond to an image restoration model 1720 of FIG. 17, the characteristic application model 230 of FIG. 2, the characteristic application model 610 of FIG. 6, and a characteristic application model 1730 of FIG. 17.

The preview image 111 may be utilized in various ways. For example, when editing the input image 101 using an image editing tool in a downscaled state, the preview image 111 depicting the pixel level characteristic may be displayed in the image editing tool. In this case, a user may edit the input image 101 while checking the pixel level characteristic in a low-resolution state. In an example, the preview image 111 may be used as a live view in the case of capturing an image, which can reduce difference between the live view and the captured result. In still an example, the preview image 111 may be used as a thumbnail of an application such as an album, allowing the user to check the pixel level characteristic of an image through a corresponding thumbnail in the low-resolution state, and perform image sharing or image deletion.

According to an embodiment, the preview image 111 may be used in an image restoration. The image restoration may be based on various restoration characteristics. A restoration characteristic refers to an attribute or property that is related to the process of restoring an image, such as denoising or deblurring. In some examples, the restoration characteristics may include at least a denoising characteristic or a deblurring characteristic. In some cases, the restoration characteristics may be used in upscaling and downscaling of images. In some cases, the image processing apparatus may generate candidate restored images having a low-resolution by performing a restoration task based on a plurality of restoration characteristics of the preview image 111, and may generate a restored image having a high-resolution by performing a restoration task on the input image 101 according based on a candidate restoration characteristic selected from the plurality of candidate restoration characteristics. A candidate restored image may include a pixel level characteristic of the input image 101 that is observable to an unaided human observer at a typical observation distance (i.e., between 0.5-3 feet). Accordingly, the user may observe and evaluate the effectiveness of each candidate restoration characteristic through the candidate restored images. In some examples, the restoration of high-resolution image may require more computation than the restoration of low-resolution image. In an embodiment, one candidate restoration characteristic is selected from a plurality of candidate restoration characteristics that are used in the image restoration performed on the preview image 111. The restoration performed on the high-resolution image may be performed based on the selected one candidate restoration character therefore be performed once. Therefore, the amount of computation may be reduced.

FIG. 2 is a diagram illustrating an example of a structure of a neural network. Referring to FIG. 2, a neural network model 200 may include a characteristic estimation model 210, an image restoration model 220, and a characteristic application model 230. The characteristic estimation model 210 may output a characteristic vector 211 representing an image characteristic of the input image 201 using a neural network. According to an embodiment, each vector value in the characteristic vector 211 may indicate a level of an individual image characteristic of the input image 201. For example, the characteristic vector 211 may include at least one of a first vector value indicating a noise level, a second vector value indicating a blur level, or a third vector value indicating a compression quality factor. The characteristic estimation model 210 may be trained based on ground truth characteristic vector 211 (GT1 212). The image restoration model 220 may output a low-resolution restored image 221 from the input image 201. The image restoration model 220 may perform image downscaling and image restoration. The image restoration model 220 may be trained using ground truth low-resolution restored image 221 (GT2 222). The characteristic application model 230 may generate a preview image 231 by applying the characteristic vector 211 to the low-resolution restored image 221.

FIG. 3 is a diagram illustrating an example of a structure of a characteristic estimation model. Referring to FIG. 3, a characteristic estimation model 300 may include a convolutional layer 310, residual blocks 320, 340, and 360, reduction blocks 330, 350, and 370, pooling layers 381 and 382, and a fully connected layer 390. The reduction block 330 may include convolutional layers 331 and 333 and nonlinear function layers 332 and 334. For example, the nonlinear function may be a ReLU function. The nonlinear function layers 332 and 334 may introduce nonlinearity into the output of the convolutional layers 331 and 333. The residual blocks 320, 340, and 360 may have the same structure as a residual block 430 of FIG. 4. The reduction blocks 350 and 370 may have the same structure as the reduction block 330. The characteristic estimation model 300 may output a characteristic vector 391 according to an input of an input image 301. The characteristic estimation model 300 may be trained according to a loss between the characteristic vector 391 and GT1 392.

According to some embodiments, the convolutional layers 310, 331, 333 may perform a convolutional operation on input with a set of filters to extract features from the image. When the forward pass of the input, filters at a convolutional layer may be convolved across the input volume, computing the dot product between the filter and the input. During the training process, the filters may be modified so that they activate when they detect a particular feature within the input.

The residual blocks 320, 340, and 360 allow the characteristic estimation model 300 to learn residual functions that capture the difference between the input and output. In some examples, the residual blocks 320, 340, and 360 are used to learn the difference between a low-resolution input image and a high-resolution output image.

The residual blocks 320, 340, and 360 may be used to reduce the spatial dimensions of the input feature maps or vectors. The pooling layers 381 and 382 may be used to reduce the spatial size (i.e., width and height) of the input volume. In some examples, the pooling layers 381 and 382 may position the input volume into a set of non-overlapping rectangles and taking the maximum, average, or other statistic within each rectangle. In some examples, the residual blocks 320, 340, and 360, and the pooling layers 381 and 382 decrease the computational complexity of the characteristic estimation model 300 and improve its efficiency.

A fully connected layer in a neural network is a layer that connects each neuron in the previous layer to every neuron in the next layer. The fully connected layer receives the outputs of the previous layer and applies a set of weights to each input to produce a set of activations. These activations are then passed through a non-linear activation function, such as the Rectified Linear Unit (ReLU) function, to produce the output of the layer. A fully connected layer may be used to capture complex patterns and relationships between features in the input volume by allowing each neuron to interact with all the neurons in the previous layer.

In an embodiment, the fully connected layer 390 outputs a characteristic vector that represents the image characteristics of the input image. Each vector value in the characteristic vector indicates the level of an individual image characteristic of the input image, such as noise level, blur level, or compression quality factor.

FIG. 4 is a diagram illustrating an example of a structure of an image restoration model. Referring to FIG. 4, the image restoration model 400 may include a downscaling block 410, convolutional layers 420, 460, and 470, and residual blocks 430, 440, and 450. For example, the downscaling block 410 may perform bicubic downscaling. In some examples, the downscaling block 410 performs bicubic downscaling by reducing the resolution of the input image using bicubic interpolation. The bicubic interpolation includes using weighted average of a set of pixels to determine the value of a new pixel. The residual block 430 may include convolutional layers 431 and 433 and a reduction block 432. The reduction block 432 may have the same structure as the reduction block 330 of FIG. 3. The residual blocks 440 and 450 may have the same structure as the residual block 430. The image restoration model 400 may output a low-resolution restored image 471 according to an input of an input image 401. The image restoration model 400 may be trained according to a loss between the low-resolution restored image 471 and GT2 472.

FIG. 5 is a diagram illustrating an example of a structure of an image restoration model. Referring to FIG. 5, an image restoration model 500 of FIG. 5 may include a downscaling block 510. The image restoration model 400 of FIG. 4 may perform the image restoration after the image downscaling. For example, the downscaling block 510 may reduce the resolution of the input image 501 to a lower resolution before passing it through the convolutional layers and residual blocks for image restoration. The image restoration model 500 of FIG. 5 may perform the image downscaling after the image restoration. The image restoration model 500 may output a low-resolution restored image 511 according to an input of an input image 501.

FIG. 6 is a diagram illustrating an example of a structure of a characteristic application model. Referring to FIG. 6, the characteristic application model 610 may output a preview image 611 based on a low-resolution restored image 601 and a characteristic vector 602. The characteristic application model 610 may apply the characteristic vector 602 to the low-resolution restored image 601. The characteristic vector 602 may include a degradation characteristic, and the characteristic application model 610 may also be referred to as a degradation model.

According to an embodiment, the characteristic vector 602 may represent the image characteristics of the input image, and for each vector value i, the characteristic vector 602 may indicate a level of an individual image characteristic of the input image. For example, the characteristic vector 602 may include at least one of a first vector value indicating a noise level, a second vector value indicating a blur level, or a third vector value indicating a compression quality factor. The image characteristic of the input image may be applied to the preview image 611 through the characteristic vector 602. For example, the characteristic vector 602 may be expressed as a three-dimensional vector such as (noise level, blur level, compression quality factor).

For example, the characteristic vector 602 of the input image may be (3, 3, 3). As the characteristic vector of (3, 3, 3) is applied to the low-resolution restored image 601, the preview image 611 may have an observable image characteristic of (3, 3, 3). Accordingly, a pixel level characteristic of a high-resolution input image may be observable in the low-resolution preview image 611. The pixel level characteristic may refer to an image characteristic that is observable in a high-resolution state but not well observable in a low-resolution state.

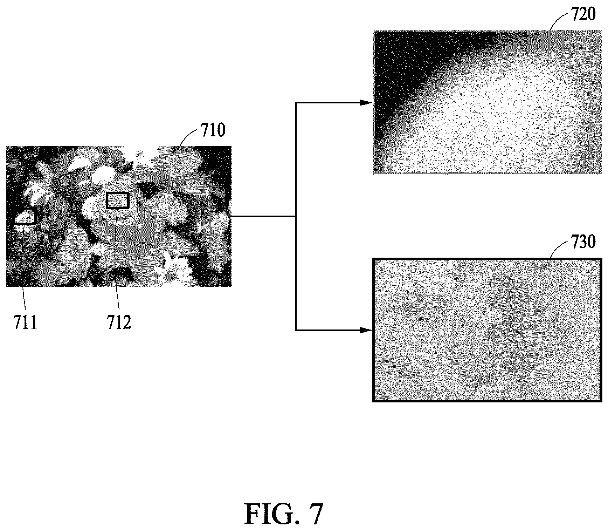

FIG. 7 is a diagram illustrating an example of an image characteristic of an input image can be observable in an upscaled image of a preview image. Referring to FIG. 7, a low-resolution image 710 may correspond to an input image downscaled without considering the image characteristic of the input image. It may be difficult to observe a pixel level characteristic of the input image through the low-resolution image 710. The low-resolution image 710 may have a noise characteristic in low-resolution that is not observable. However, according to an upscaled image 720 of a first region 711 and an upscaled image 730 of a second region 712 of the low-resolution image 710, a significant noise level of the low-resolution image 710 may be observable.

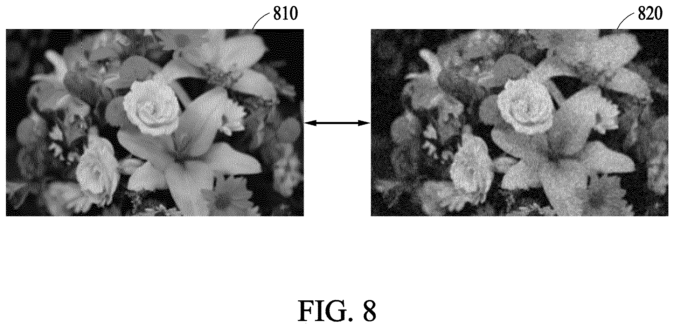

FIG. 8 is a diagram illustrating an example of a preview image with an applied image characteristic of the input image. Referring to FIG. 8, unlike a low-resolution image 810, a significant noise level may be observable through a preview image 820. The low-resolution image 810 may correspond to the low-resolution image 710 of FIG. 7. The image characteristic of the input image may be applied to the preview image 820. As a result, a pixel level characteristic of the input image may be observable in the preview image 820.

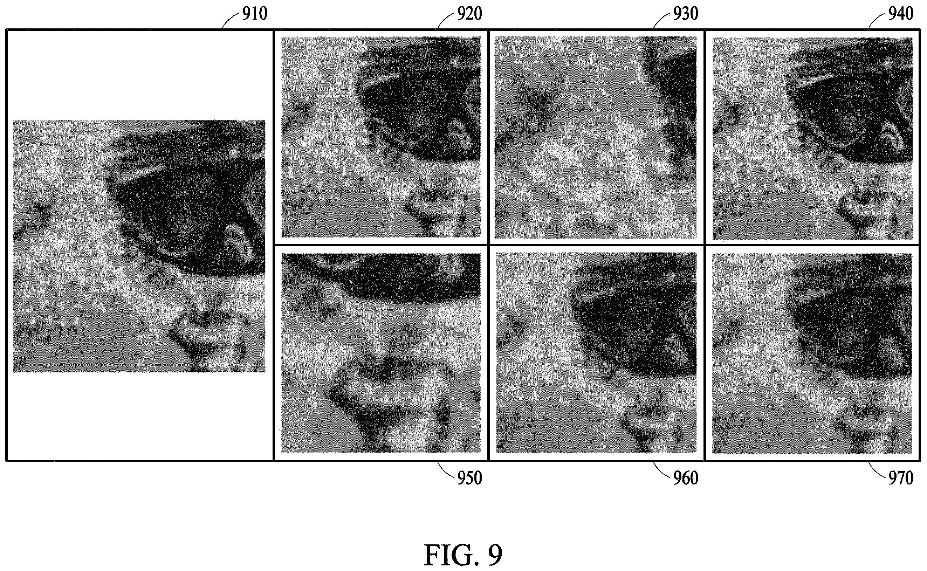

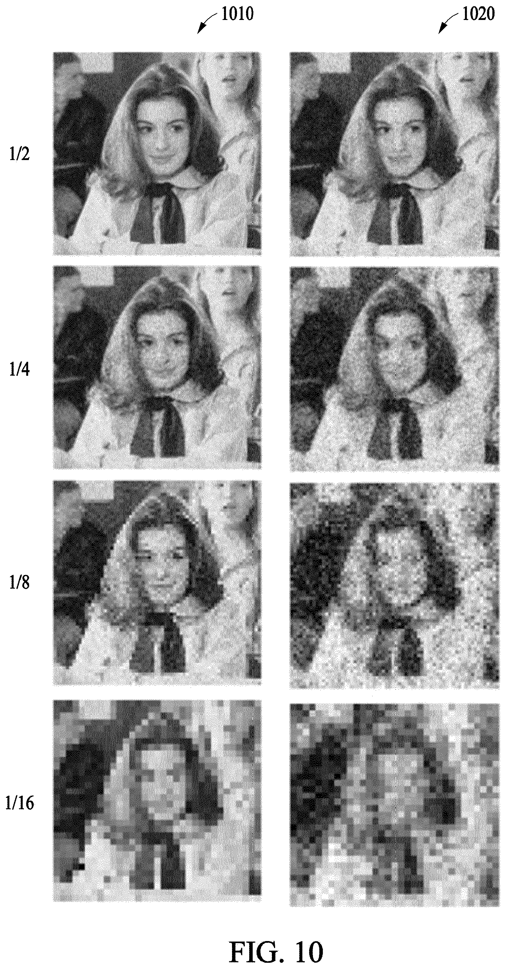

FIGS. 9 and 10 are diagrams illustrating examples of results of various image processing. FIG. 9 shows an input image 910, a low-resolution image 920, cropped images 930 and 950, a-low resolution restored image 940, a preview image 960, and a GT image 970. The input image 910 may be a high-resolution image, and the remaining images 920 to 970 may be low-resolution images. The low-resolution image 920 may be generated by downscaling the input image 910 without considering the image characteristics of the input image 910, and the random cropped images 930 and 960 may be generated by cropping random regions of the input image 910. A pixel level characteristic of the input image 910 is not observable in the low-resolution image 920, but the pixel level characteristic of the input image 910 may be observable in the preview image 960.

FIG. 10 shows low-resolution images 1010 generated through downscaling without considering the image characteristics of the input images, and preview images 1020 generated by applying an image characteristic of an input image. The low-resolution images 1010 and the preview images 1020 may have a resolution that is 1/2, 1/4, 1/8, and 1/16 of the resolution of the input image, respectively. Although a pixel level characteristic of the input image is hardly observable from the low-resolution images 1010, the preview images 1020 may have the pixel level characteristic of the input image that is observable.

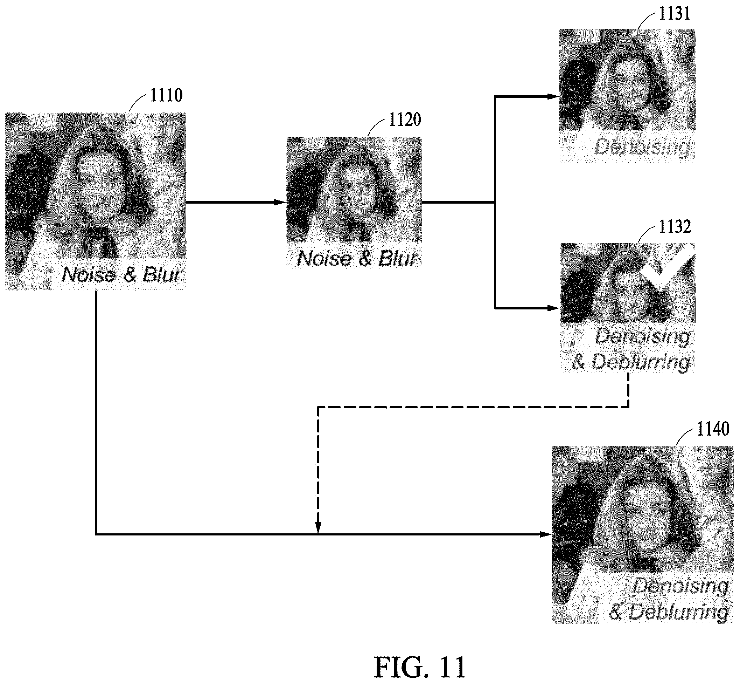

FIG. 11 is a diagram illustrating an example of an image restoration process. Referring to FIG. 11, an input image 1110 may have a level of a noise characteristic and a level of a blur characteristic. A preview image 1120 may be generated according to the image characteristics of the input image 1110. The preview image 1120 may show a pixel level characteristic of the input image 1110 according to the noise characteristic and blur characteristic of the input image 1110. The input image 1110 may correspond to a high-resolution image, and the preview image 1120 may correspond to a low-resolution image.

Candidate restored images 1131 and 1132 may be generated by performing a restoration based on the candidate restoration characteristics on the preview image 1120. The candidate restoration characteristics may include a denoising characteristic and a deblurring characteristic. The candidate restored images 1131 and 1132 may correspond to low-resolution images. Like the preview image 1120, the candidate restored images 1131 and 1132 may have observable pixel level characteristic. The image characteristics according to the candidate restoration characteristics observable from the candidate restored images 1131 and 1132 having a high-resolution when the candidate restored images 1131 and 1132 are upscaled to have the high-resolution may be observable from the candidate restored images 1131 and 1132 having the low resolution.

The user may select one of the more than one candidate restoration characteristics to be used for the image restoration from the more than one candidate restoration characteristics with reference to the candidate restored images 1131 and 1132. The candidate restored images 1131 and 1132 may show the pixel level characteristic according to the more than one candidate restoration characteristics and the user may relatively accurately make a selection by predicting of the restoration results based on each of the more than one candidate restoration characteristic. For example, the user may select the candidate restoration characteristics of the candidate restored image 1132. The image processing apparatus may generate a restored image 1140 by performing the restoration task on the input image 1110 according to the selected candidate restoration characteristics. The restored image 1140 may correspond to a high-resolution image.

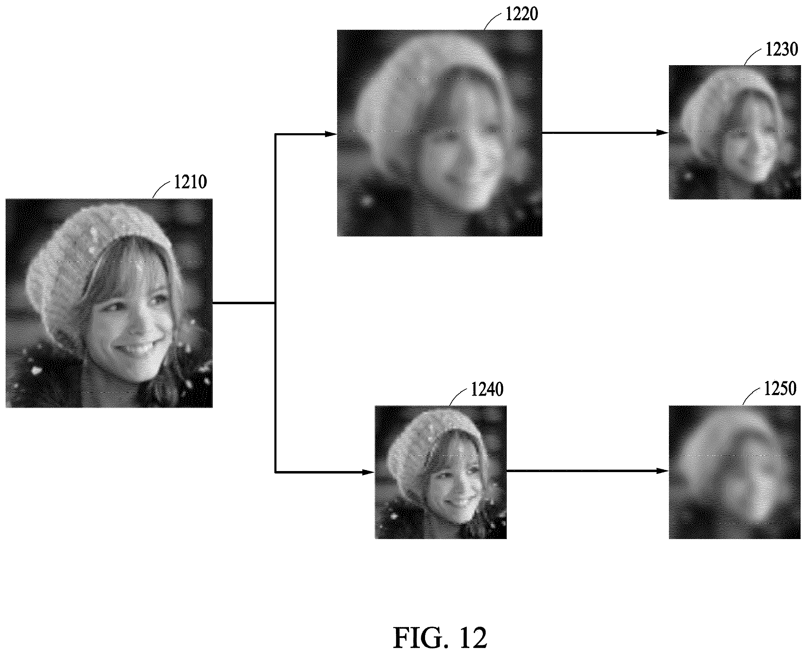

FIGS. 12, 13, and 14 are diagrams illustrating examples of a relationship between image downscaling and image characteristics. Referring to FIG. 12, a blur effect at a level of 0.5 may be applied to a first image 1210 to generate a second image 1220 and the second image 1220 may be downscaled to generate a third image 1230. The first image 1210 may be downscaled to generate a fourth image 1240, and the blur effect at the level of 0.5 may be applied to the fourth image 1240 to generate a fifth image 1250. The third image 1230 may have a blur at the level of 0.25 due to the image downscaling. The blur level of a final result may vary depending on factors including the order of the image downscaling and blur effect application.

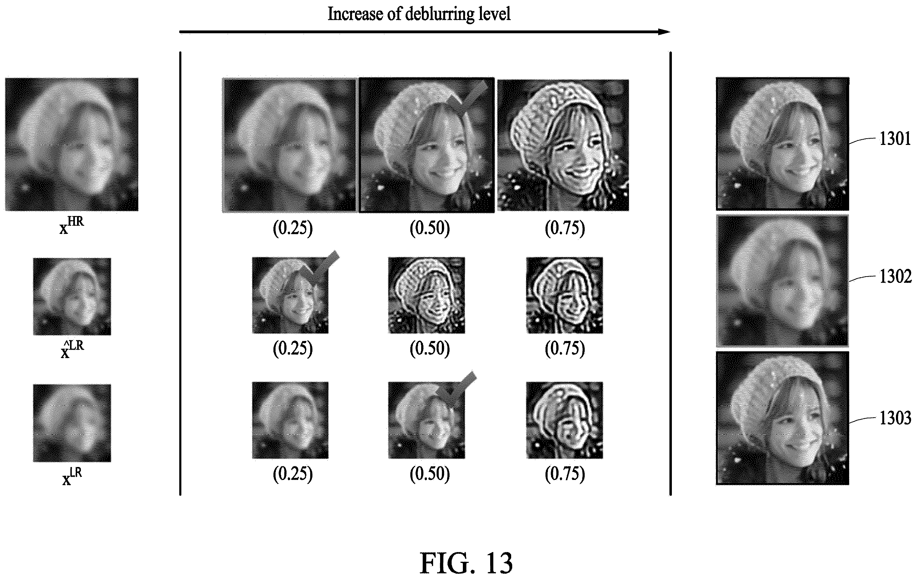

Referring to FIG. 13, a deblurring task based on a second image $x^{HR}$, a third image $\hat{x}^{LR}$, and a fifth image $x^{LR}$ may be performed. The second image $x^{HR}$, the third image $\hat{x}^{LR}$, and the fifth image $x^{LR}$ may correspond to the second image 1220, the third image 1230, and the fifth image 1250 of FIG. 12, respectively. If a deblurring level is determined according to the images $x^{HR}$, $x^{LR}$, and $\hat{x}^{LR}$, the deblurring level of 0.5 may be determined for the second image $x^{HR}$, the deblurring level of 0.25 may be determined for the third image $\hat{x}^{LR}$, and the deblurring level of 0.5 may be determined for the fifth image $x^{LR}$. In this case, the images $x^{HR}$ and $x^{LR}$ may be restored to have the blur level of 0 like high-resolution restored images 1301 and 1303, but the third image $\hat{x}^{LR}$ may be restored to have the blur level of 0.25 like a high-resolution restored image 1302.

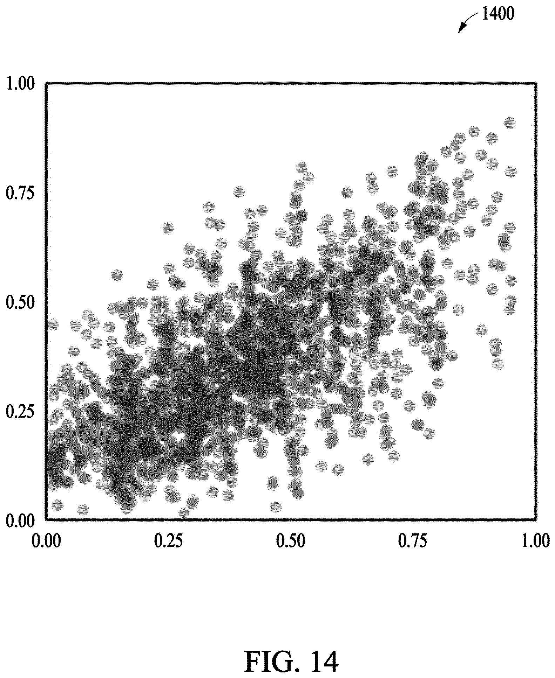

A graph 1400 of FIG. 14 shows a relationship between two variables. The first variable is the mismatch between restoration tasks. The second variable is the inconsistency between the degradation levels. As the inconsistency between the degradation levels increases, the mismatch between restoration tasks may also increase. A mismatch may occur when a pixel level characteristic of an original image is not observable through a low-resolution image. According to some embodiments, the mismatch may be reduced because the pixel level characteristic of the original image may become observable through the preview image.

FIGS. 15, 16, and 17 are diagrams illustrating examples of various structures of a neural network model. The network structures of FIGS. 15 to 17 may correspond to modifications of the network structures of FIGS. 2 to 6. Referring to FIG. 15, an image restoration model 1510 may output a characteristic vector $\hat{l}$ and a low-resolution restored image $\hat{x}^{LR}_{clean}$ based on an input of an input image $x^{HR}$. The image restoration model 1510 may perform the image characteristic estimation, image downscaling, and image restoration. The image restoration model 1510 may be trained based on a loss between the characteristic vector $\hat{l}$ and GT $l$ and a loss between the low-resolution restored image $\hat{x}^{LR}_{clean}$ and GT $x^{LR}_{clean}$. A characteristic application model 1520 may generate a preview image $\hat{x}^{LR}$ by applying the characteristic vector $\hat{l}$ to the low-resolution restored image $\hat{x}^{LR}_{clean}$.

Referring to FIG. 16, an image restoration model 1610 may generate the preview image $\hat{x}^{LR}$ according to an input of the input image $x^{HR}$. The image restoration model 1610 may perform image characteristic estimation, image downscaling, and image restoration. In some cases, the image restoration model 1610 may perform the image characteristic estimation and image downscaling without performing the image restoration. The image restoration model 1610 may be trained based on the loss between the preview image $\hat{x}^{LR}$ and GT $x^{LR}$.

Referring to FIG. 17, the characteristic estimation model 1710 may estimate the characteristic vector $\hat{l}$ according to an input of the input image $x^{HR}$. The characteristic estimation model 1710 may be trained based on the loss between the characteristic vector $\hat{l}$ and the GT $l$. The image restoration model 1720 may output the low-resolution image $\hat{x}^{LR}_{clean}$ based on an input of the input image $x^{HR}$. The image restoration model 1720 may perform image downscaling without performing the image restoration. The image restoration model 1720 may be trained based on the loss between the low-resolution image $\hat{x}^{LR}_{clean}$ and the GT $x^{LR}_{clean}$. The characteristic application model 1730 may generate the preview image $\hat{x}^{LR}$ by applying the characteristic vector $\hat{l}$ to the low-resolution image $\hat{x}^{LR}_{clean}$.

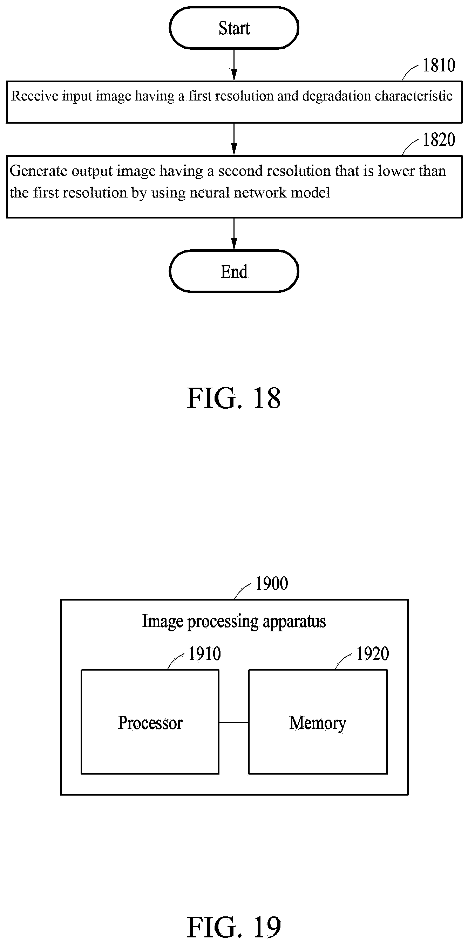

FIG. 18 is a flowchart illustrating an example of an image processing method. In an embodiment, the image processing apparatus may receive an input image having a first resolution and a degradation characteristic, generate an output image based on the input image using a neural network model. In one example, the output image has a second resolution that is lower than the first resolution. In one example, the neural network model is configured to apply the degradation characteristic of the input image to the output image. In one example, the degradation characteristic is observable in the output image.

Referring to FIG. 18, the image processing apparatus receives an input image having a first resolution in operation 1810 and estimates a preview image of the input image having a second resolution that is lower than the first resolution using a neural network model in operation 1820. The neural network model may apply an image characteristic of the input image having the first resolution to the preview image having the second resolution. The image characteristic observable from the input image may be observable from the preview image.

When the input image is downscaled to a second resolution without applying the image characteristic of the input image to the preview image, the image characteristic may not be observable from the input image with the second resolution. According to embodiments of the present disclosure, by applying the image characteristic of the input image to the preview image, the image characteristic that was not observable from the input image with the second resolution can become observable from the preview image. The image characteristic may include a degradation characteristic of the input image.

Operation 1820 includes estimating the image characteristic of the input image based on the input image, generating a temporary restored image having the second resolution by performing image downscaling and image restoration based on the input image, and applying the image characteristic to the temporary restored image. The neural network model may include a first model configured to estimate the image characteristic of the input image, a second model configured to generate the temporary restored image, and a third model configured to apply the image characteristic to the temporary restored image. The first model may output a characteristic vector corresponding to the image characteristic based on an input of the input image, and the third model may output the preview image based on an input of the temporary restored image and the characteristic vector. The neural network model includes a combined model configured to estimate the image characteristic of the input image, estimate the temporary restored image, and apply the image characteristic to the temporary restored image.

Operation 1820 includes estimating the image characteristic of the input image based on the input image, generating a temporary image having the second resolution by performing image downscaling based on the input image, and applying the image characteristic to the temporary image. The neural network model may include a first model configured to estimate the image characteristic of the input image, a second model configured to generate the temporary image, and a third model configured to apply the image characteristic to the temporary image.

The image processing apparatus may generate candidate restored images having the second resolution by performing a restoration task according to a plurality of restoration characteristics on the preview image, and may generate a restored image having the first resolution by performing a restoration task on the input image according to a candidate restoration characteristic selected from the plurality of candidate restoration characteristics. The image characteristics according to the candidate restoration characteristics observable from the candidate restored images having the first resolution when the candidate restored images are upscaled to have the first resolution may be observable from the candidate restored images having the second resolution.

FIG. 19 is a block diagram illustrating an example of a configuration of an image processing apparatus. Referring to FIG. 19, an image processing apparatus 1900 includes a processor 1910 and a memory 1920. The memory 1920 may be connected to the processor 1910, and may store data and instructions executable by the processor 1910.1. The memory 1920 may include, for example, a non-transitory computer-readable storage medium, for example, a highspeed random access memory (RAM) and/or a non-volatile computer-readable storage medium (for example, at least one disk storage device, a flash memory device, or other non-volatile solid state memory devices).

The processor 1910 may execute the instructions to perform the operations described above with reference to FIGS. 1 to 18 and 20. For example, the processor 1910 may receive an input image having a first resolution and a degradation characteristic, and generate a preview image of the input image having a second resolution that is lower than the first resolution by using a neural network model. The neural network model may apply an degradation characteristic of the input image to the preview image, and the image characteristic observable from the input image having the first resolution may be observable from the preview image having the second resolution. In addition, the description provided with reference to FIGS. 1 to 18, and 20 may apply to the image processing apparatus 1900.

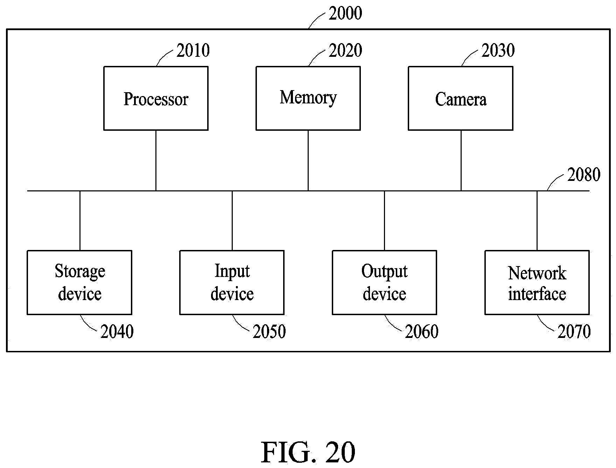

FIG. 20 is a block diagram illustrating an example of a configuration of an electronic apparatus. Referring to FIG. 20, an electronic apparatus 2000 may include a processor 2010, a memory 2020, a camera 2030, a storage device 2040, an input device 2050, an output device 2060, and a network interface 2070, and these components may communicate with one another through a communication bus 2080. For example, the electronic apparatus 2000 may be implemented as at least a portion of, for example, a mobile device such as a mobile phone, a smartphone, a personal digital assistant (PDA), a netbook, a tablet computer, a laptop computer, and the like, a wearable device such as a smart watch, a smart band, smart glasses, and the like, a home appliance such as a television (TV), a smart TV, a refrigerator, and the like, a security device such as a door lock and the like, and a vehicle such as an autonomous vehicle, a smart vehicles, and the like. The electronic apparatus 2000 may structurally and/or functionally include the image processing apparatus 1900 of FIG. 19.

The processor 2010 may execute functions and instructions in the electronic apparatus 2000. For example, the processor 2010 may process instructions stored in the memory 2020 or the storage device 2040. The processor 2010 may perform one or more of the operations described above with reference to FIGS. 1 to 19. The memory 2020 may include a computer-readable storage medium or device. The memory 2020 may store instructions executed by the processor 2010, and may store related information while software and/or applications are being executed by the electronic apparatus 2000.

The camera 2030 may generate an input image. The input image may include a photo and/or video. The storage device 2040 may include a computer-readable storage medium or device. The storage device 2040 may store a greater amount of information than the memory 2020 and may store the information for a long period of time. The storage device 2040 may include, for example, a magnetic hard disk, an optical disc, a flash memory, a floppy disk, or other types of nonvolatile memory that are well-known in the art.

The input device 2050 may receive user input through an input method, for example, using a keyboard and a mouse, and new input methods that include using a touch input, a voice input, and an image input. The input device 2050 may include, for example, a keyboard, a mouse, a touch screen, a microphone, or any other device that detects an input from a user and transmits the detected input to the electronic apparatus 2000. The output device 2060 may provide an output of the electronic apparatus 2000 to a user through a visual, auditory, or tactile channel. The output device 2060 may include, for example, a display, a touch screen, a speaker, a vibration generating device, or any other device that provides an output to a user. The network interface 2070 may communicate with an external device through a wired or wireless network.

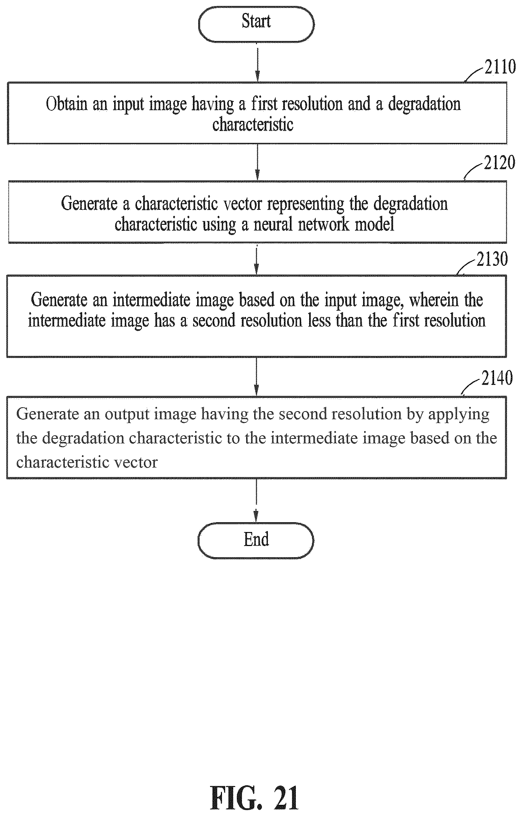

FIG. 21 is a flowchart illustrating a method for image processing. In some examples, these operations are performed by a system or apparatus as illustrated in FIGs 19 and 20, including a processor executing a set of codes to control functional elements of an apparatus. Additionally, or alternatively, certain processes are performed using special-purpose hardware. Generally, these operations are performed according to the methods and processes described in accordance with aspects of the present disclosure. In some cases, the operations described herein are composed of various substeps, or are performed in conjunction with other operations.

At operation 2110, the system obtains an input image having a first resolution and a degradation characteristic. For example, the input image could be a blurry image.

At operation 2120, the system generates a characteristic vector representing the degradation characteristic using a neural network model. For example, the characteristic vector could represent the level and location of the blurriness.

At operation 2130, the system generates an intermediate image based on the input image, wherein the intermediate image has a second resolution less than the first resolution. In some cases, the intermediate image is not degraded like the original input image (i.e., it has a smaller resolution, and may not be blurry).

At operation 2140, the system generates an output image having the second resolution by applying the degradation characteristic to the intermediate image based on the characteristic vector. For example, the output image could be a low-resolution preview image that has a level of blurriness that appears the same as the high-resolution input image.

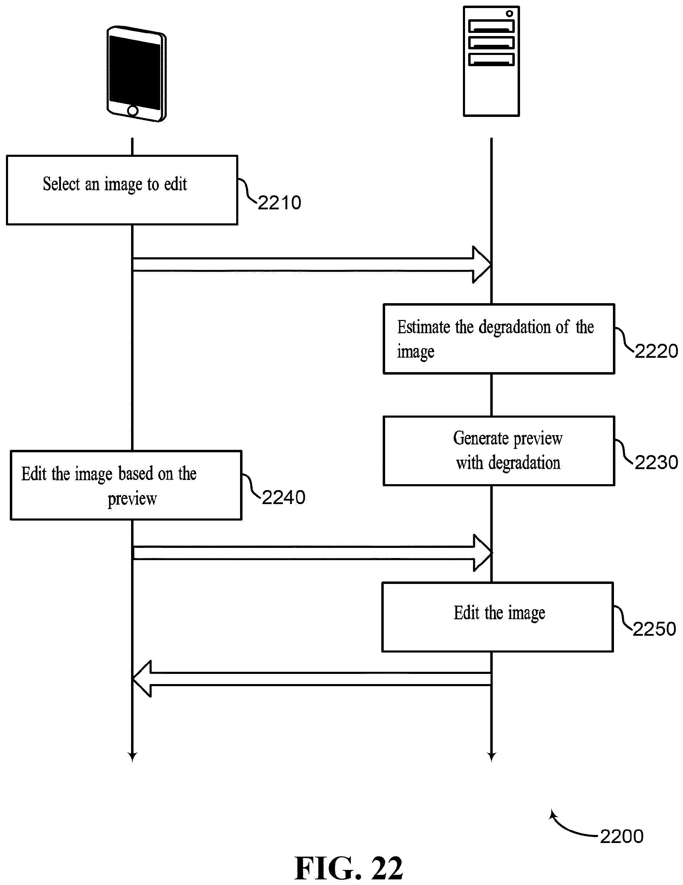

FIG. 22 illustrates a method for a user to edit an image using an image processing apparatus. For example, aspects of an image editing process 2200 may be performed by the system or apparatus with reference to FIGs 19 and 20.

At step 2210, a user selects an image to edit. In some examples, this image may be a high-resolution image with a pixel level image characteristic that may not be observable in low-resolution images. In some examples, the pixel level image characteristic includes a degradation characteristic.

At step 2220, the image processing apparatus estimates the degradation of the image. For example, the device estimates the degradation of the high-resolution image, which may include characteristics such as noise and blur. This information may be used later to generate a preview image that shows a pixel level characteristic of the high-resolution image.

At step 2230, the image processing apparatus generates a preview image with degradation characteristics. For example, the image processing apparatus uses the estimated degradation of the high-resolution image to generate a preview image with the same level of degradation. This preview image is a low-resolution image that can be displayed to the user to provide an indication of what the final image may look like after processing.

At step 2240, the user provides edits to the image based on the preview. For example, the user may make adjustments to the levels of noise and blur or apply filters and other image processing techniques to achieve the desired result.

At step 2250, the image processing apparatus edits the image. For example, the image processing apparatus applies various image processing techniques to the high-resolution image to achieve the desired result. This may include restoring the pixel level characteristic that may not have been observable in the low-resolution preview image, resulting in a final high-resolution image that accurately reflects the original image with the desired edits applied.

The example embodiments described herein may be implemented using a hardware component, a software component and/or a combination thereof. A processing device may be implemented using one or more general-purpose or special purpose computers, such as, for example, a processor, a controller, an arithmetic logic unit (ALU), a digital signal processor, a microcomputer, a field programmable gate array (FPGA), a programmable logic unit (PLU), a microprocessor or other device capable of responding to and executing instructions in a defined manner. The processing device may run an operating system (OS) and one or more software applications that run on the OS. The processing device also may access, store, manipulate, process, and create data in response to execution of the software. For simplicity, the description of a processing device is used as singular; however, one skilled in the art will appreciate that a processing device may include multiple processing elements and multiple types of processing elements. For example, the processing device may include a plurality of processors, or a single processor and a single controller. In addition, different processing configurations are possible, such as parallel processors.

The term "software" in the present disclosure may include a computer program, a piece of code, an instruction, or some combination thereof, to independently or uniformly instruct or configure the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over network-coupled computer systems so that the software is stored and executed in a distributed fashion. The software and data may be stored by one or more non-transitory computer-readable recording mediums.

Methods according to embodiments of the present disclosure described above may be recorded in non-transitory computer-readable media including program instructions to implement various operations of the above-described embodiments. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as CD-ROM discs and DVDs; magneto-optical media such as optical discs; and hardware devices that are specially configured to store and perform program instructions, such as read-only memory (ROM), random access memory (RAM), flash memory, and the like. Examples of program instructions include both machine code, such as produced by a compiler, and files containing higher-level code that may be executed by the computer using an interpreter.

The above-described devices may be configured to act as one or more software modules in order to perform the operations of the above-described examples, or vice versa.

As described above, although the examples have been described with reference to the drawings, a person skilled in the art may apply various technical modifications and variations based thereon. For example, suitable results may be achieved if the described techniques are performed in a different order and/or if components in a described system, architecture, device, or circuit are combined in a different manner and/or replaced or supplemented by other components or their equivalents.

A structural or functional description is provided herein as an example only and various alterations and modifications may be made to the examples. Here, the example embodiments are not construed as limited to the disclosure and should be understood to include all changes, equivalents, and replacements within the idea and the technical scope of the disclosure.

Although terms of "first," "second," and the like are used to explain various components, the components are not limited to such terms. These terms are used only to distinguish one component from another component. For example, a first component may be referred to as a second component, or similarly, the second component may be referred to as the first component within the scope of the present disclosure.

It should be noted that if it is described that one component is "connected", "coupled", or "joined" to an component, a third component may be "connected", "coupled", and "joined" between the first and second components, although the first component may be directly connected, coupled, or joined to the second component.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

As used herein, "at least one of A and B", "at least one of A, B, or C," and the like, each of which may include any one of the items listed together in the corresponding one of the phrases, or all possible combinations thereof.

Unless otherwise defined, all terms, including technical and scientific terms, used herein have the same meaning as commonly understood by one of ordinary skill in the art to which this disclosure pertains. Terms, such as those defined in commonly used dictionaries, are to be interpreted as having a meaning that is consistent with their meaning in the context of the relevant art, and are not to be interpreted in an idealized or overly formal sense unless expressly so defined herein.

**Claims**

1. A computer-implemented image processing method comprising:

    receiving an input image having a first resolution and a degradation characteristic, wherein degradation refers to change or reduction in the quality or information content of an image; and generating an output image based on the input image using a neural network model, wherein the output image has a second resolution that is lower than the first resolution, and wherein the neural network model is configured to apply the degradation characteristic of the input image to the output image; wherein the generating of the output image comprises:

        estimating the degradation characteristic of the input image based on the input image; generating a temporary restored image having the second resolution by performing image downscaling and image restoration based on the input image; and applying the degradation characteristic to the temporary restored image; and **characterized in that** the neural network model comprises a combined model configured to estimate the degradation characteristic of the input image, generate the temporary restored image, and apply the degradation characteristic to the temporary restored image.

2. The method of claim 1, wherein the degradation characteristic is not observable in a low-resolution version of the input image that has the second resolution and is formed by downscaling the input image.

3. The method of claim 1 or 2, wherein the degradation characteristic comprises a noise characteristic or a blur characteristic.

4. The method of claim 1, wherein the neural network model comprises:

    a characteristic estimation model configured to estimate the degradation characteristic of the input image;
an image restoration model configured to generate the temporary restored image; and
a characteristic application model configured to apply the degradation characteristic to the temporary restored image.

5. The method of claim 4, wherein the characteristic estimation model is configured to output a characteristic vector corresponding to the degradation characteristic based on the input image, and wherein the characteristic application model is configured to generate the output image based on the temporary restored image and the characteristic vector.

6. The method of any one of the previous claims, further comprising:

generating a plurality of candidate restored images having the second resolution by performing a restoration task based on a plurality of candidate restoration characteristics; and generating a restored image having the first resolution by performing a restoration task on the input image based on a candidate restoration characteristic selected by a user from the plurality of candidate restoration characteristics.

7. The method of claim 6, wherein a plurality of degradation characteristics is observable from the plurality of candidate restored images, respectively, when the plurality of candidate restored images are upscaled to have the first resolution.

8. A non-transitory computer-readable storage medium storing instructions that, when executed by a processor, cause the processor to perform the method of any one of the previous claims.

9. An electronic apparatus comprising:

a camera configured to generate an input image having a first resolution and a degradation characteristic, wherein degradation refers to change or reduction in the quality or information content of an image; and
a processor configured to:

generate an output image based on the input image, wherein the output image has a second resolution that is lower than the first resolution; and
apply the degradation characteristic to the output image using a neural network model;

wherein the processor is configured to:

estimate the degradation characteristic of the input image based on the input image;
generate a temporary restored image having the second resolution by performing image downscaling and image restoration based on the input image; and
apply the degradation characteristic to the temporary restored image; and
**characterized in that** the neural network model comprises a combined model configured to estimate the degradation characteristic of the input image, generate the temporary restored image, and apply the degradation characteristic to the temporary restored image.

10. The electronic apparatus of claim 9, wherein the degradation characteristic is not observable in a low-resolution version of the input image that has the second resolution and is formed by downscaling the input image.

11. The electronic apparatus of claim 9 or 10, wherein the degradation characteristic comprises a noise characteristic or a blur characteristic.

**Patentansprüche**

1. Computerimplementiertes Bildverarbeitungsverfahren, das Folgendes umfasst:

Empfangen eines Eingangsbildes mit einer ersten Auflösung und einer Verschlechterungseigenschaft, wobei sich Verschlechterung auf eine Änderung oder Verringerung der Qualität oder des Informationsgehalts eines Bildes bezieht; und
Erzeugen eines Ausgangsbildes basierend auf dem Eingangsbild unter Verwendung eines neuronalen Netzwerkmodells,
wobei das Ausgangsbild eine zweite Auflösung aufweist, die niedriger ist als die erste Auflösung, und
wobei das neuronale Netzwerkmodell konfiguriert ist, um die Verschlechterungseigenschaft des Eingangsbildes auf das Ausgangsbild anzuwenden;
wobei das Erzeugen des Ausgangsbildes Folgendes umfasst:

Schätzen der Verschlechterungseigenschaft des Eingangsbildes basierend auf dem Eingangsbild;
Erzeugen eines temporären wiederhergestellten Bildes mit der zweiten Auflösung durch Durchführen einer Bildverkleinerung und einer Bildwiederherstellung basierend auf dem Eingangsbild; und
Anwenden der Verschlechterungseigenschaft auf das temporäre wiederhergestellte Bild; und

**dadurch gekennzeichnet, dass** das neuronale Netzwerkmodell ein kombiniertes Modell umfasst, das konfiguriert ist, um die Verschlechterungseigenschaft des Eingangsbildes zu schätzen, das temporäre wiederhergestellte Bild zu erzeugen und die Schätzeigenschaft auf das temporäre wiederhergestellte Bild anzuwenden.

2. Verfahren nach Anspruch 1, wobei die Verschlechterungseigenschaft in einer niedrig aufgelösten Version des Eingangsbildes, die die zweite Auflösung aufweist und durch Herunterskalieren des Eingangsbildes gebildet wird, nicht beobachtbar ist.

3. Verfahren nach Anspruch 1 oder 2, wobei die Verschlechterungseigenschaft eine Rauscheigenschaft oder eine Unschärfeeigenschaft umfasst.

4. Verfahren nach Anspruch 1, wobei das neuronale Netzwerkmodell Folgendes umfasst:

ein Modell zur Eigenschaftsschätzung, das konfiguriert ist, um die Verschlechterungseigenschaft des Eingangsbildes zu schätzen;
ein Modell zur Bildwiederherstellung, das konfiguriert ist, um das temporäre wiederhergestellte Bild zu erzeugen; und
ein Modell zur Eigenschaftsanwendung, das konfiguriert ist, um die Verschlechterungseigenschaft auf das temporäre wiederhergestellte Bild anzuwenden.

5. Verfahren nach Anspruch 4, wobei das Modell zur Eigenschaftsschätzung konfiguriert ist, um basierend auf dem Eingangsbild einen Eigenschaftsvektor auszugeben, der der Verschlechterungseigenschaft entspricht, und wobei das Modell zur Eigenschaftsanwendung konfiguriert ist, um das Ausgangsbild basierend auf dem temporären wiederhergestellten Bild und dem Eigenschaftsvektor zu erzeugen.

6. Verfahren nach einem der vorhergehenden Ansprüche, das ferner Folgendes umfasst:

Erzeugen einer Vielzahl von wiederhergestellten Kandidatenbildern mit der zweiten Auflösung durch Durchführen einer Wiederherstellungsaufgabe basierend auf einer Vielzahl von Kandidaten-Wiederherstellungseigenschaften; und
Erzeugen eines wiederhergestellten Bildes mit der ersten Auflösung durch Durchführen einer Wiederherstellungsaufgabe an dem Eingangsbild basierend auf einer Kandidaten-Wiederherstellungseigenschaft, die von einem Benutzer aus der Vielzahl von Kandidaten-Wiederherstellungseigenschaften ausgewählt wird.

7. Verfahren nach Anspruch 6, wobei eine Vielzahl von jeweiligen Verschlechterungseigenschaften an der Vielzahl von wiederhergestellten Kandidatenbildern beobachtet werden kann, wenn die Vielzahl von wiederhergestellten Kandidatenbildern hochskaliert werden, so dass sie die erste Auflösung aufweisen.

8. Nicht-flüchtiges, computerlesbares Speichermedium, auf dem Anweisungen gespeichert sind, die, wenn sie von einem Prozessor ausgeführt werden, bewirken, dass der Prozessor das Verfahren nach einem der vorhergehenden Ansprüche durchführt.

9. Elektronische Vorrichtung, die Folgendes umfasst:

eine Kamera, die zum Empfangen eines Eingangsbildes mit einer ersten Auflösung und einer Verschlechterungseigenschaft konfiguriert ist, wobei sich Verschlechterung auf eine Änderung oder Verringerung der Qualität oder des Informationsgehalts eines Bildes bezieht; und
einen Prozessor, der zu Folgendem konfiguriert ist:

Erzeugen eines Ausgangsbildes basierend auf dem Eingangsbild, wobei das Ausgangsbild eine zweite Auflösung aufweist, die niedriger ist als die erste Auflösung, und Anwenden der Verschlechterungseigenschaft auf das Ausgangsbild unter Verwendung eines neuronalen Netzwerkmodells;

wobei der Prozessor zu Folgendem konfiguriert ist:

Schätzen der Verschlechterungseigenschaft des Eingangsbildes basierend auf dem Eingangsbild;
Erzeugen eines temporären wiederhergestellten Bildes mit der zweiten Auflösung durch Durchführen einer Bildverkleinerung und einer Bildwiederherstellung basierend auf dem Eingangsbild; und
Anwenden der Verschlechterungseigenschaft auf das temporäre wiederhergestellte Bild; und

**dadurch gekennzeichnet, dass** das neuronale Netzwerkmodell ein kombiniertes Modell umfasst, das konfiguriert ist, um die Verschlechterungseigenschaft des Eingangsbildes zu schätzen, das temporäre wiederhergestellte Bild zu erzeugen und die Schätzeigenschaft auf das temporäre wiederhergestellte Bild anzuwenden.

10. Elektronische Vorrichtung nach Anspruch 9, wobei die Verschlechterungseigenschaft in einer niedrig aufgelösten Version des Eingangsbildes, die die zweite Auflösung aufweist und durch Herunterskalieren des Eingangsbildes gebildet wird, nicht beobachtbar ist.

11. Elektronische Vorrichtung nach Anspruch 9 oder 10, wobei die Verschlechterungseigenschaft eine Rauscheigenschaft oder eine Unschärfeeigenschaft umfasst.

**Revendications**

1. Procédé de traitement d'image mis en œuvre par ordinateur, comprenant les étapes consistant à :

   recevoir une image d'entrée présentant une première résolution et une caractéristique de dégradation, la dégradation ayant trait à un changement ou à une réduction de la qualité ou du contenu informationnel d'une image, et générer une image de sortie fondée sur l'image d'entrée à l'aide d'un modèle de réseau neuronal ;
   ladite image de sortie présentant une deuxième résolution qui est inférieure à la première résolution, et
   ledit modèle de réseau neuronal étant configuré pour appliquer la caractéristique de dégradation de l'image d'entrée à l'image de sortie ;
   ladite génération de l'image de sortie comprenant les opérations consistant à :

      estimer la caractéristique de dégradation de l'image d'entrée compte tenu de l'image d'entrée,
      générer une image restaurée temporaire présentant la deuxième résolution, par réalisation d'une réduction d'échelle de l'image et d'une restauration de l'image compte tenu de l'image d'entrée, et appliquer la caractéristique de dégradation à l'image restaurée temporaire ; et
      **caractérisé en ce que** le modèle de réseau neuronal comprend un modèle combiné configuré pour estimer la caractéristique de dégradation de l'image d'entrée, générer l'image restaurée temporaire et appliquer la caractéristique de dégradation à l'image restaurée temporaire.

2. Procédé selon la revendication 1, dans lequel la caractéristique de dégradation n'est pas observable dans une version basse résolution de l'image d'entrée présentant la deuxième résolution et formée par réduction d'échelle de l'image d'entrée.

3. Procédé selon la revendication 1 ou 2, dans lequel la caractéristique de dégradation comprend une caractéristique de bruit ou une caractéristique de flou.

4. Procédé selon la revendication 1, dans lequel le modèle de réseau neuronal comprend :

   un modèle d'estimation de caractéristique configuré pour estimer la caractéristique de dégradation de l'image d'entrée,
   un modèle de restauration d'image configuré pour générer l'image restaurée temporaire, et
   un modèle d'application de caractéristique configuré pour appliquer la caractéristique de dégradation à l'image restaurée temporaire.

5. Procédé selon la revendication 4, dans lequel le modèle d'estimation de caractéristique est configuré pour produire un vecteur caractéristique correspondant à la caractéristique de dégradation compte tenu de l'image d'entrée, et
dans lequel le modèle d'application de caractéristique est configuré pour générer l'image de sortie compte tenu de l'image restaurée temporaire et du vecteur caractéristique.

6. Procédé selon l'une quelconque des revendications précédentes, comprenant en outre les étapes consistant à :

   générer une pluralité d'images candidates restaurées présentant la deuxième résolution par réalisation d'une tâche de restauration fondée sur une pluralité de caractéristiques de restauration candidates, et
   générer une image restaurée présentant la première résolution par réalisation d'une tâche de restauration sur l'image d'entrée compte tenu d'une caractéristique de restauration candidate sélectionnée par un utilisateur parmi la pluralité de caractéristiques de restauration candidates.

7. Procédé selon la revendication 6, dans lequel une pluralité de caractéristiques de dégradation sont respectivement observables à partir de la pluralité d'images candidates restaurées, lorsque la pluralité d'images candidates restaurées sont remises à l'échelle de façon à avoir la première résolution.

8. Support de stockage non transitoire lisible par ordinateur sur lequel sont stockées des instructions qui, lorsqu'elles sont exécutées par un processeur, amènent le processeur à exécuter le procédé de l'une quelconque des revendications précédentes.

9. Appareil électronique comprenant :

une caméra configurée pour générer une image d'entrée présentant une première résolution et une caractéristique de dégradation, la dégradation ayant trait à un changement ou à une réduction de la qualité ou du contenu informationnel d'une image, et
un processeur configuré pour :

générer une image de sortie fondée sur l'image d'entrée, l'image de sortie présentant une deuxième résolution inférieure à la première résolution, et
appliquer la caractéristique de dégradation à l'image de sortie à l'aide d'un modèle de réseau neuronal ;

ledit processeur étant configuré pour :

estimer la caractéristique de dégradation de l'image d'entrée compte tenu de l'image d'entrée,
générer une image restaurée temporaire présentant la deuxième résolution, par réalisation d'une réduction d'échelle de l'image et d'une restauration de l'image compte tenu de l'image d'entrée, et
appliquer la caractéristique de dégradation à l'image restaurée temporaire ; et

**caractérisé en ce que** le modèle de réseau neuronal comprend un modèle combiné configuré pour estimer la caractéristique de dégradation de l'image d'entrée, générer l'image restaurée temporaire et appliquer la caractéristique de dégradation à l'image restaurée temporaire.

10. Appareil électronique selon la revendication 9, dans lequel la caractéristique de dégradation n'est pas observable dans une version basse résolution de l'image d'entrée présentant la deuxième résolution et formée par réduction d'échelle de l'image d'entrée.

11. Appareil électronique selon la revendication 9 ou 10, dans lequel la caractéristique de dégradation comprend une caractéristique de bruit ou une caractéristique de flou.

Input image

Image characteristic
102

Neural network
model
110

Preview image

FIG. 1

FIG. 2

**FIG. 3**

**FIG. 4**

FIG. 5

FIG. 6

FIG. 7

FIG. 8

FIG. 9

FIG. 10

FIG. 11

FIG. 12

FIG. 13

FIG. 14

FIG. 15

FIG. 16

$$x^{HR}$$

$$x_{clean}^{LR}$$

$$\hat{x}_{clean}^{LR}$$

$$\hat{x}^{LR}$$

1710

1720

1730

FIG. 17

Start

Receive input image having a first resolution and degradation characteristic ⌐1810

Generate output image having a second resolution that is lower than the first resolution by using neural network model ⌐1820

End

## FIG. 18

⌐1900

Image processing apparatus

⌐1910  ⌐1920

| Processor | Memory |

## FIG. 19

FIG. 20

FIG. 21

Select an image to edit — 2210

Estimate the degradation of the image — 2220

Generate preview with degradation — 2230

Edit the image based on the preview — 2240

Edit the image — 2250

2200

**FIG. 22**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20220122305 A1

**Non-patent literature cited in the description**

- Image Thumbnails That Represent Blur and Noise. **R. SAMADANI et al.** IEEE Transactions On Image Processing. IEEE, 01 February 2010, vol. 19, 363-373